# EUROPÄISCHE PATENTSCHRIFT

(11) **EP 1 462 702 B1**
(45) Veröffentlichungstag und Bekanntmachung des Hinweises auf die Patenterteilung: **11.04.2007**
(21) Anmeldenummer: 04005368.8
(22) Anmeldetag: 06.03.2004
(51) Int. Cl.: F16L 19/08, F16L 19/028

(54) **Rohrverbindung mit einem umgeformten Rohr**
Pipe connection with deformed pipe
Raccord de tuyaux avec un tuyau déformé

(30) Priorität: 26.03.2003 DE 10313678
(43) Veröffentlichungstag der Anmeldung: 29.09.2004
(73) Patentinhaber: Eifeler Maschinenbau GmbH, 53881 Euskirchen (DE)
(72) Erfinder: Kloss, Alexander, 50997 Köln (DE); Schorn-Gilson, Alfons, 53913 Swisttal-Odendorf (DE)
(74) Vertreter: Bauer, Dirk

(56) Entgegenhaltungen:
- DE-A- 19 958 475
- DE-C- 19 742 917
- US-A- 5 961 160

## Beschreibung

Die Erfindung betrifft eine Rohrverbindung mit einem umgeformten Rohr, einem Verschraubungskörper mit einem Innenkonus, einem sich daran anschließenden zylindrischen Abschnitt und einem diesen in axiale Richtung begrenzenden radial ausgerichteten Rohrsitzboden sowie einer Überwurfmutter mit einem Innenkonus, der im Betriebszustand der Rohrverbindung mit einer dem Rohrende abgewandten kegeligen Spannfläche eines Haltewulstes des umgeformten Rohres sowie mit einer dem Rohrende abgewandten kegeligen Spannfläche eines zwischen dem Haltewulst und dem Innenkonus des Verschraubungskörpers angeordneten und auf das Rohrende aufgeschobenen Stützrings zusammenwirkt. Dabei liegt der Stützring mit einer dem Rohrende zugewandten kegeligen Spannfläche an dem Innenkonus des Verschraubungskörpers an und in einer durch eine Stirnfläche des Stützrings, dem Innenkonus des Verschraubungskörpers und dem Außenmantel des Rohrendes gebildeten Kammer, ist eine Weichdichtung angeordnet. Des Weiteren liegt die Stirnfläche des Rohres im Betriebszustand der Rohrverbindung an dem Rohrsitzboden an.
Eine derartige Rohrverbindung ist beispielsweise aus der DE 197 42 917 C2 bekannt und dort in dem Ausführungsbeispiel nach Fig. 4 dargestellt. Im dargestellten Betriebszustand dieser Rohrverbindung liegt der Stützring mit einer dem Rohrende zugewandten radialen Stirnfläche an der ebenso ausgerichteten Stirnfläche des Verschraubungskörpers an. Sobald eine derartige Blockanlage des Stützrings zwischen Überwurfmutter und Verschraubungskörper erreicht ist, wird dies dem Monteur durch einen starken Drehmomentanstieg verdeutlicht, woraufhin der Vorgang des Anziehens der Überwurfmutter zu beenden ist.

Radial innerhalb der anzugsbegrenzenden Stirnfläche des Stützrings ist dieser mit einer axial vorstehenden Nase mit einer äußeren kegeligen Mantelfläche versehen. Mit dieser Nase greift der Stützring in den Innenkonus des Verschraubungskörpers ein und bewirkt somit eine Führung des Stützrings in radiale Richtung, die bereits vor Erreichen des Betriebszustandes der Rohrverbindung wirksam wird. Aufgrund der Begrenzung der axialen Verlagerung des Stützrings durch den Anschlag im Bereich der Stirnflächen desselben und des Verschraubungskörpers wird verhindert, dass der Schneidring in Folge einer übermäßig weiten Verschiebung in den Innenkonus des Verschraubungskörpers unerwünscht weit radial nach innen verlagert wird. In dem in Fig. 4 der DE 197 42 917 C2 gezeigten Betriebszustand der vorbekannten Rohrverbindung besteht zwischen der inneren Mantelfläche des Stützrings und der zugeordneten äußeren Mantelfläche des Rohres ein Ringspalt. Dieser Ringspalt wirkt sich negativ auf die Festigkeit der Rohrverbindung, insbesondere bei Biegewechselbeanspruchungen aus, da Winkelbewegungen des Stützrings relativ zu dem Verschraubungskörper nicht zuverlässig verhindert werden können.

Des Weiteren ist aus der DE 199 58 475 A1 noch eine Rohrverbindung bekannt, bei der der Stützring jedoch nicht mit einem vorderen kegelförmigen Ansatz versehen ist, der in den genormten 24°-Innenkonus des Verschraubungskörpers eingreifen könnte. Der Bereich zwischen Innenkonus des Verschraubungskörpers und zugeordneter äußerer Mantelfläche des Rohrendes ist bei dieser vorbekannten Rohrverbindung im Wesentlichen vollständig durch eine Weichdichtung ausgefüllt, die an einer konisch zurückspringenden Fläche des Stützrings befestigt ist.

Im Betriebszustand dieser Rohrverbindung ist der Stützring mit seinen gegenüberliegenden radial ausgerichteten Stirnflächen zwischen der ebenso ausgerichteten Stirnfläche des Verschraubungskörpers einerseits und einer radial nach außen vorstehenden Haltenase des Haltewulstes eingespannt. Es liegt somit auch in diesem Fall in axiale Richtung ein beidseitiger Blockanschlag des Stützrings vor, welcher dem Monteur beim Anziehen der Überwurfmutter einen deutlichen Drehmomentanstieg signalisiert.

Bei dieser Rohrverbindung ist es als nachteilig anzusehen, dass eine Fixierung des Stützrings in radiale Richtung im Bereich des Verschraubungskörpers lediglich durch die gummielastische Weichdichtung gegeben ist. Eine hinreichende Kraftaufnahme kann durch dieses Bauteil jedoch nicht erreicht werden, so dass auch im Falle dieser Rohrverbindung die Dauerfestigkeit bei einer Biegewechselbeanspruchung zu wünschen übrig lässt.

Der Erfindung liegt die Aufgabe zugrunde, eine Rohrverbindung mit einem umgeformten Rohr vorzuschlagen, die die vorstehend genannten Nachteile vermeidet und insbesondere auch bei einer Biegewechselbeanspruchung eine dauerhafte Betriebssicherheit gewährleistet.

Ausgehend von einer Rohrverbindung der eingangs beschriebenen Art wird diese Aufgabe erfindungsgemäß dadurch gelöst, dass im gefügten Zustand der Rohrverbindung, in dem der Stützring an dem Haltewulst anliegt, der Innenkonus der Überwurfmutter zunächst nur an der dem Rohrende abgewandten kegeligen Spannfläche des Stützrings anliegt und zwischen dem Innenkonus der Überwurfmutter und der dem Rohrende abgewandten kegeligen Spannfläche des Haltewulstes ein Ringspalt besteht, wohingegen im Betriebszustand der Rohrverbindung zwischen dem Haltewulst und dem Stützring ein Ringspalt besteht.

Bei der erfindungsgemäßen Rohrverbindung liegt bereits im gefügten Zustand eine exakte radiale Führung des Stützrings vor, da dieser mit seinem vorderen Abschnitt in den Innenkonus des Verschraubungskörpers eingreift und sich mit seiner kegeligen Außenfläche an der korrespondierenden konischen Innenfläche des Verschraubungskörpers abstützt. Des Weiteren steht die dem Rohrende abgewandte, rückwärtige, ebenfalls keglige Außenfläche des Stützrings mit der konischen inneren Mantelfläche der Überwurfmutter in Kontakt. Im Zuge eines weiteren Anziehens der Überwurfmutter verlagert sich zunächst der Stützring relativ zu dem Rohrende in axiale Richtung bis auch die rückwärtige keglige Spannfläche des Haltewulstes mit der inneren konischen Spannfläche der Überwurfmutter in Kontakt gerät. In diesem Zustand besteht zwischen dem Haltewulst und dem Stützring bereits ein Ringspalt. In Folge der zuvor beschriebenen axialen Verlagerung des Stützrings in den Verschraubungskörper wird erstgenannter in Folge der Konizität des vorderen Bohrungsabschnitts des Verschraubungskörpers auch radial nach innen verlagert.

Der Montageendzustand, d.h. der Betriebszustand wird erreicht, sobald die vordere Stimfläche des Rohres an dem Rohrsitzboden des Verschraubungskörpers zur Anlage gelangt. Dieser Zustand wird dem Monteur durch einen deutlichen Drehmomentanstieg angezeigt. In diesem Zustand ist der Stützring weiterhin an beiden Enden im Bereich seiner kegeligen Mantelflächen eingespannt und sicher lagefixiert und zwar einerseits durch den Innenkonus des Verschraubungskörpers und andererseits durch die innere konische Spannfläche der Überwurfmutter. Diese Lagefixierung besteht beginnend vom gefügten Zustand bis hin zum Montageendzustand während des gesamten Montagevorgangs.

Gemäß einer besonders bevorzugten Ausgestaltung der erfindungsgemäßen Rohrverbindung ist vorgesehen, dass die innere Mantelfläche des Stützrings im Betriebszustand der Rohrverbindung an der zugeordneten äußeren Mantelfläche des Rohres anliegt. Hierdurch wird eine besonders vorteilhafte Lagefixierung der Einzelteile der Rohrverbindung zueinander gewährleistet, die auch bei einer Biegewechselbeanspruchung zu einer dauerhaften Beibehaltung der Dichtheit führt.

Zur Vermeidung einer Doppelpassung (Anschlag im Bereich des Rohrsitzbodens und evtl. Anschlag im Bereich der vorderen Stirnfläche des Verschraubungskörpers) wird vorgeschlagen, dass im Betriebszustand der Rohrverbindung zwischen einer radial ausgerichteten Stirnfläche des Verschraubungskörpers und dem Stützring ein Ringspalt verbleibt. Aufgrund der beidseitig vorhandenen Einspannung des Stützrings im Bereich seiner konischen Mantelflächen ist ein Blockanschlag im Bereich des Stützrings bei der erfindungsgemäßen Verbindung nicht erforderlich. Wie bereits ausgeführt, wird die Anzeige des Montageendes durch den Blockanschlag im Bereich des Rohrsitzbodens und den nach Erreichen dieses Zustandes eintretenden Drehmomentanstieg signalisiert.

Gemäß einer des Weiteren bevorzugten Ausführungsform der Rohrverbindung besitzt der Haltewulst eine dem Rohrende zugewandte keglige Spannfläche, die mit einer entsprechend geformten konischen Spannfläche an den zugeordneten Ende des Stützrings zusammenwirkt, wobei der Kegelwinkel bzw. Konuswinkel im Bereich zwischen 100° und 160° beträgt. Auf diese Weise ist gewährleistet, dass die in axiale Richtung wirkende Komponente der Kraft im Bereich dieser Spannflächen größer ist als die in radiale Richtung wirkende Kraftkomponente.

Um den Montagevorgang zu vereinfachen und eine fehlerhafte Montage der Weichdichtung auszuschließen, sollte diese an der dem Rohrende zugewandten Seite des Stützrings befestigt sein, beispielsweise durch Verkleben.

Eine besonders große rückwärtige keglige Spannfläche des Stützrings kann erreicht werden, indem der Stützring mit einer dem Innenkonus der Überwurfmutter zugewandten Nase versehen ist, die sich im gefügten Zustand der Rohrverbindung in einem Bereich oberhalb des maximalen Durchmessers des Haltewulstes befindet. Die Spannfläche des Stützrings kann sich auf diese Weise in Bereiche mit kleinerem Durchmesser erstrecken, so dass im Wege der Flächenvergrößerung eine Reduzierung der Flächenpressung erreichbar ist. In diesem Zusammenhang ist nach einer Weiterbildung der Erfindung vorgesehen, dass die Nase außen von der dem Rohrende abgewandten kegeligen Spannfläche des Stützrings und innen von einer axial parallel verlaufenden zylindrischen Mantelfläche begrenzt ist.

Vorzugsweise beträgt die in axiale Richtung des Rohres gemessene Breite des Ringspalts zwischen dem Innenkonus der Überwurfmutter und der dem Rohrende abgewandten kegeligen Spannfläche des Haltewulstes zwischen 0,2 und 0,5 mm, wobei das konkrete Maß von den Maßen des Rohres (Durchmesser, Wandstärke) abhängig ist.

Schließlich ist nach der Erfindung noch vorgesehen, dass der Stützring an seinem dem Rohrende zugewandten Ende mit einer Schneide versehen ist, die im Betriebszustand der Rohrverbindung in die äußere Mantelfläche des Rohrendes eingegraben ist. Eine derartige Schneide wirkt nach einmaligem Erreichen des Betriebszustandes als Verliersicherung für den Stützring, auch wenn die Rohrverbindung später nochmals gelöst werden muss.

Die Erfindung wird nachfolgend anhand eines Ausführungsbeispiels einer Rohrverbindung, das in der Zeichnung dargestellt ist, näher erläutert. Es zeigt:
- Fig. 1: einen Halbschnitt durch eine erfindungsgemäße Rohrverbindung im gefügten Zustand,
- Fig. 2: wie Fig. 1 jedoch in einem Zwischenzustand mit weiter angezogener Überwurfmutter,
- Fig. 3: wie Fig. 1 jedoch im Betriebszustand der Rohrverbindung und
- Fig. 3.1: wie Fig. 3 jedoch einer Rohrverbindung mit einem abgewandelten Stützring mit einer Schneide am vorderen Ende.

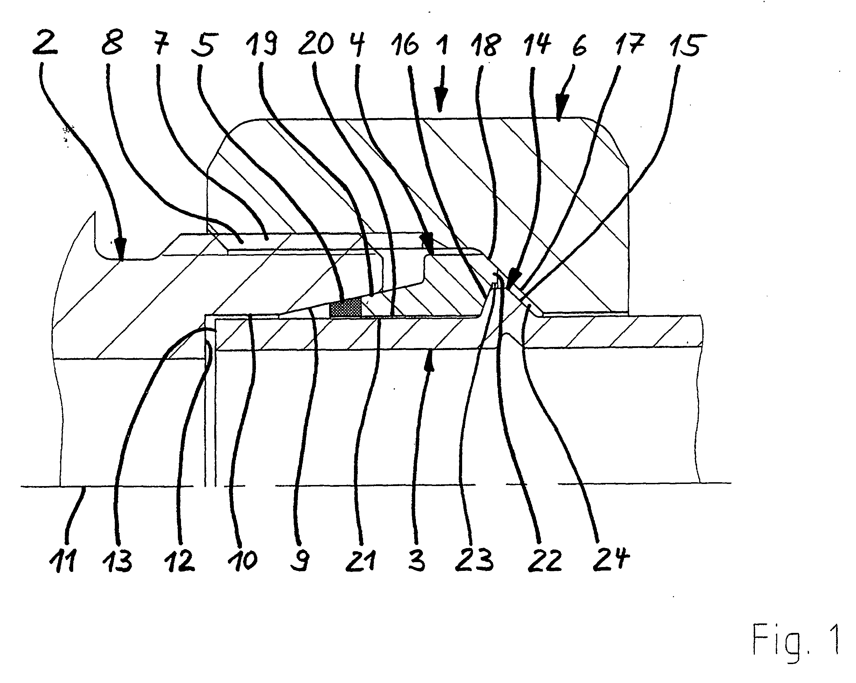

Eine in Fig. 1 im Halbschnitt dargestellte Rohrverbindung 1 besteht aus einem Verschraubungskörper 2, einem umgeformten Ende eines Rohres 3, einem auf das Rohrende aufgeschobenen Stützring 4 mit angeklebter Weichdichtung 5 sowie einer Überwurfmutter 6, die mit ihrem Innengewinde 7 mit dem Außengewinde 8 des Verschraubungskörpers 2 zusammenwirkt. Der Verschraubungskörper 2 besitzt einen genormten 24°-Innenkonus 9 und einem sich daran anschließenden zylindrischen Bohrungsabschnitt 10, der von einem radial zu der Längsachse 11 der Rohrverbindung verlaufenden Rohrsitzboden 12 begrenzt wird.

Das Rohr 3 weist im Abstand von seiner Stirnfläche 13 einen umformtechnisch im Wege eines Stauchvorgangs hergestellten Haltewulst 14 auf, der einerseits eine dem Verschraubungskörper 2 abgewandte hintere keglige Spannfläche 15 mit einem 90°-Kegelwinkel und andererseits eine dem Verschraubungskörper 2 zugewandte vordere keglige Spannfläche 16 mit einem Kegelwinkel von 140° besitzt. Die hintere Spannfläche 15 wirkt mit dem genormten 90°-Innenkonus 17 der Überwurfmutter 6 zusammen, wohingegen die vordere Spannfläche 16 des Haltewulstes 14 in dem in Fig. 1 dargestellten gefügten Zustand der Rohrverbindung mit einer unter demselben Kegelwinkel von 140° verlaufenden hinteren konischen Spannfläche 16' des Stützrings 4 anliegt. Im gefügten Zustand, der durch Aufschieben des Stützrings 4 auf das Rohrende bis an den Haltewulst 14, Einstecken des Rohres 3 in den Verschraubungskörper 2 und Anziehen der Überwurfmutter - soweit von Hand möglich - erreicht wird, der Verbindung besteht des Weiteren eine Anlage zwischen einer dem Verschraubungskörper 2 abgewandten kegeligen Spannfläche 18 des Stützrings 4 und dem Innenkonus 17 der Überwurfmutter 6. Eine radiale Fixierung des Stützrings 4 wird des Weiteren dadurch erzielt, dass dieser mit einer dem Verschraubungskörper 2 zugewandten vorderen kegeligen Spannfläche 19 in den Innenkonus 9 des Verschraubungskörpers 2 eingreift und sich dort abstützt. Im gefügten Zustand der Rohrverbindung besteht zwischen der zylindrischen inneren Mantelfläche 20 des Stützrings 4 und der gegenüberliegenden äußeren Mantelfläche 21 des Rohres 3 ein (geringfügiger) Ringspalt.

Des weiteren ist aus Fig. 1 ersichtlich, dass der Stützring 4 auf seiner dem Verschraubungskörper 2 abgewandten Seite im Bereich oberhalb des größten Durchmessers des Haltewulstes 14 des umgeformten Rohres 3 mit einer Nase 22 versehen ist. Diese Nase 22 wird außen von der dem Rohrende abgewandten kegeligen Spannfläche 18 des Stützrings 4 und innen von einer achsparallel verlaufenden zylindrischen Mantelfläche 23 begrenzt, die im Abstand zu dem größten Durchmessers des Haltewulstes angeordnet ist.

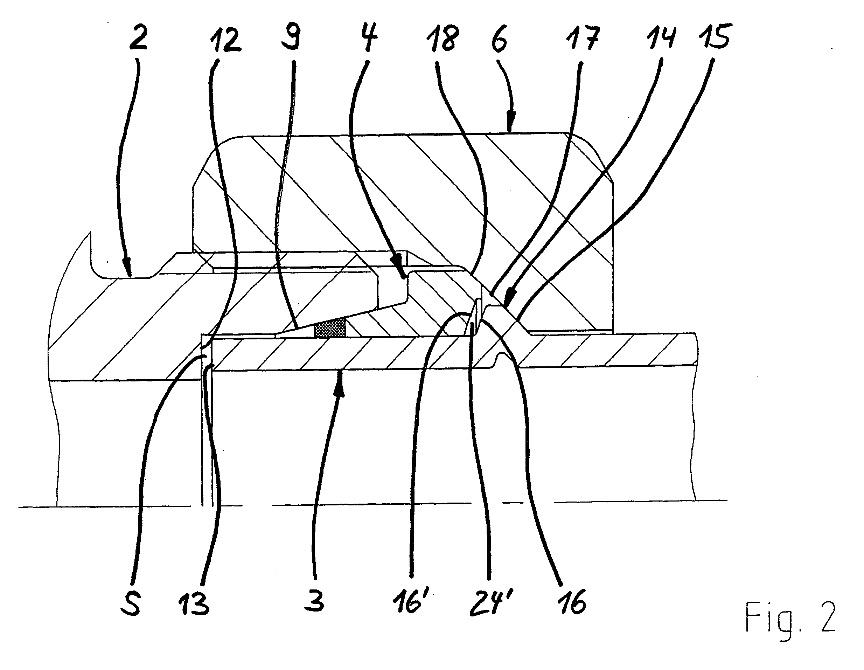

Fig. 2 zeigt im Vergleich mit Fig. 1 einen Zustand, in dem die Überwurfmutter 6 ausgehend von der in Fig. 1 gezeigten gefügten Stellung weiter angezogen wurde, wodurch es zu einer Verlagerung des Stützrings 4 in axiale Richtung auf den Rohrsitzboden 12 zu gekommen ist. Aufgrund des 24°-Innenkonus 9 des Verschraubungskörpers 2 geht diese Axialverschiebung des Stützrings 4 mit einer Verlagerung desselben radial nach innen einher. In dem in Fig. 2 dargestellten Zwischenzustand hat diese radiale Verlagerung des Stützrings 4 nach innen bereits dazu geführt, dass der in Fig. 1 noch vorhandene Ringspalt zwischen der inneren Mantelfläche 20 des Stützrings 4 und der äußeren Mantelfläche 21 des Rohres 3 nicht mehr vorhanden ist, so dass die vorgenannten Bauteile nunmehr in Kontakt treten.

Des Weiteren ist infolge der axialen Verschiebung des Stützrings 4 der in Fig. 1 vorhandene Ringspalt 24 zwischen der hinteren Spannfläche 15 des Haltewulstes 14 und dem Innenkonus 17 der Überwurfmutter 6 nicht mehr vorhanden. Der Innenkonus 17 der Überwurfmutter 6 stützt sich in diesem Zustand sowohl an der hinteren Spannfläche 15 des Haltewulstes 14 als auch an der hinteren kegeligen Spannfläche 18 des Stützrings 4 ab. Statt dessen besteht nunmehr ein Ringspalt 24' zwischen der vorderen Spannfläche 16 des Haltewulstes 14 und der hinteren Spannfläche 16' des Stützrings 4.

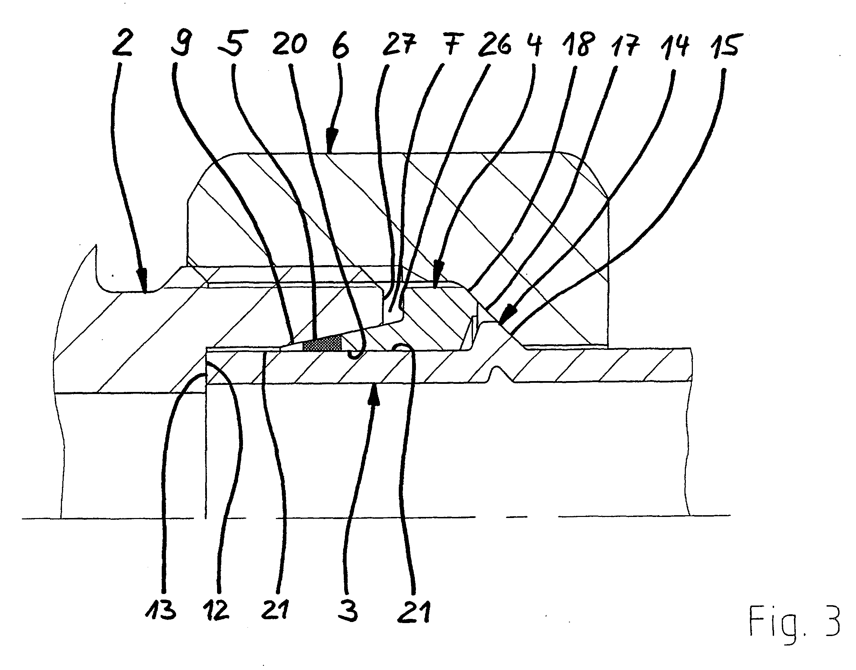

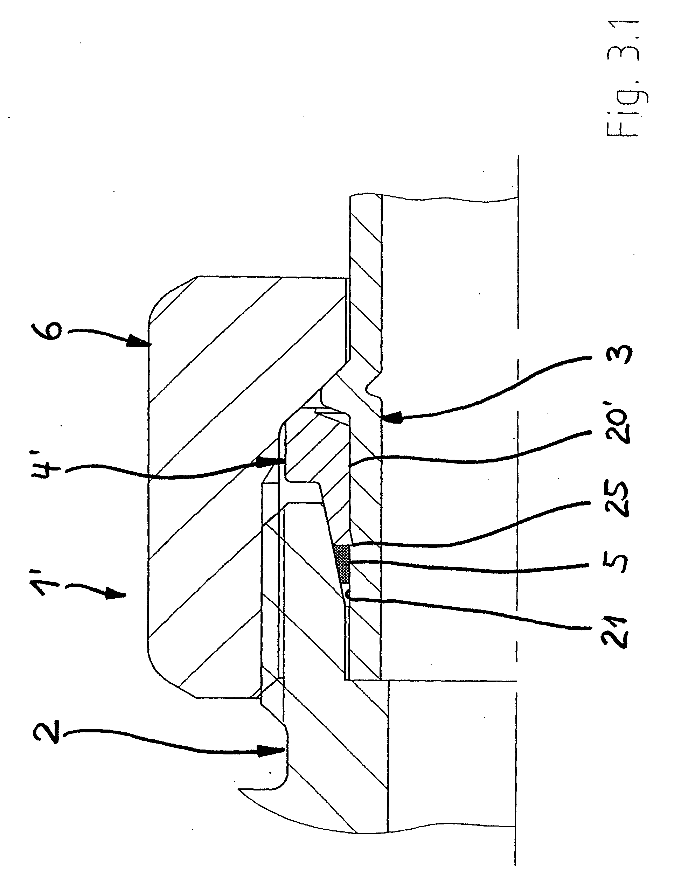

Beim weiteren Anziehen der Überwurfmutter wird nunmehr noch der in Fig. 2 sichtbare Spalt S zwischen der vorderen Stirnfläche 13 des Endes des Rohres 3 und dem Rohrsitzboden 12 geschlossen. Die Anlage zwischen den beiden vorgenannten Bauteilen wird für den Monteur durch einen deutlichen Drehmomentanstieg erkennbar, so dass ein definiertes Montageende vorgegeben ist. Die Montageendstellung der Bauteile ist in Fig. 3 dargestellt. In dieser Stellung ist die Weichdichtung 5 aufgrund der gegenüber Fig. 2 noch weiteren axialen Vorverlagerung des Stützrings 4 tiefer in dem sich querschnittsmäßig verjüngenden Spalt zwischen der äußeren Mantelfläche 21 des Rohres 3 und dem Innenkonus 9 des Verschraubungskörpers 2 verquetscht. Weiterhin verlaufen auch im Betriebszustand der Rohrverbindung 1 gemäß Fig. 3 die hintere keglige Spannfläche 18 des Stützrings 4 und die hintere keglige Spannfläche 15 des Spannwulstes 14 innerhalb einer gemeinsamen Ebene, wie sie durch den Innenkonus 17 der Überwurfmutter 6 definiert ist. Aufgrund der unmittelbaren Anlage zwischen der zylindrischen Innenfläche 21 des Stützrings 4 und der äußeren Mantelfläche 21 des Rohres 3 in seinem Endabschnitt, ist in Verbindung mit der radialen Fixierung des Stützrings 4 auch das Ende des Rohres 3 in radiale Richtung über eine große Fläche fixiert. Die erfindungsgemäße Rohrverbindung zeichnet sich daher durch eine große Sicherheit gegen Undichtigkeiten auch bei Biegewechselbeanspruchungen aus. Ferner ist Fig. 3 zu entnehmen, dass zwischen einer radial verlaufenden Fläche 26 des Stützrings 4 und einer ebenso ausgerichteten Stirnfläche 27 des Verschraubungskörpers 2 im Betriebszustand der Rohrverbindung ein Ringspalt F verbleibt, so dass das System beim Blockanschlag der vorderen Stirnseite 13 des Rohres 3 am Rohrsitzboden 12 nicht geometrisch übereinstimmt ist.

Schließlich ist in Fig. 3.1 noch eine alternative Rohrverbindung 1' dargestellt, bei der der Stützring 4' an der Vorderkante seiner zylindrischen Innenfläche 20' mit einer radial nach innen gerichteten umlaufenden Schneide 25 versehen ist. Diese ist im Betriebszustand der Rohrverbindung 1' in die zylindrische Mantelfläche 21 des Rohres 3 eingegraben. Von der Wirkung her ähnelt die Schneide 25 derjenigen einer Schneidringverbindung, obwohl im vorliegenden Fall die Schneide 25 nicht primär einer Abdichtung dienen soll. Vielmehr hat die Schneide 25 die Aufgabe, als Verliersicherung für den Stützring 4' zu wirken, damit dieser bei einem nachträglichen Lösen der Rohrverbindung 1' nicht von dem Ende des Rohres 3 abfallen kann. Da die Weichdichtung 5 auch bei dem Schneidring 4' gemäß Fig. 3.1 an dessen vorderer Stirnseite fest verklebt ist, kann auch diese Weichdichtung 5 bei einem Lösen der Rohrverbindung 1 nicht unbeabsichtigt verloren gehen. Im übrigen stimmen Aufbau und Funktion der Rohrverbindung nach Fig. 3.1 mit der gemäß den Figuren 1 bis 3 überein.

## Patentansprüche

1. Rohrverbindung (I, 1') mit einem umgeformten Rohr (3), einem Verschraubungskörper (2) mit einem Innenkonus (9), einem sich daran anschließenden zylindrischen Abschnitt (10) und einem diesen in axiale Richtung begrenzenden radial ausgerichteten Rohrsitzboden (12) sowie einer Überwurfmutter (6) mit einem Innenkonus (17), der im Betriebszustand der Rohrverbindung (1, 1') mit einer dem Rohrende abgewandten kegeligen Spannfläche (15) eines Haltewulstes (14) des umgeformten Rohres (3) sowie mit einer dem Rohrende abgewandten kegeligen Spannfläche (18) eines zwischen dem Haltewulst (14) und dem Innenkonus (9) des Verschraubungskörpers (2) angeordneten und auf das Rohrende aufgeschobenen Stützrings (4, 4') zusammenwirkt, wobei der Stützring (4, 4') mit einer dem Rohrende zugewandten kegeligen Spannfläche (19) an dem Innenkonus (9) des Verschraubungskörpers (2) anliegt und in einer durch eine Stirnfläche des Stützrings (4, 4'), dem Innenkonus (9) des Verschraubungskörpers (2) und der äußeren Mantelfläche (21, 21') des Rohrendes gebildeten Kammer eine Weichdichtung (5) angeordnet ist und wobei die Stirnfläche (13) des Rohres (3) im Betriebszustand der Rohrverbindung (1,1') an dem Rohrsitzboden (12) anliegt, **dadurch gekennzeichnet, dass** im gefügten Zustand der Rohrverbindung (1,1'), in dem der Stützring (4, 4') an dem Haltewulst (14) anliegt, der Innenkonus (17) der Überwurfmutter (6) zunächst nur an der dem Rohrende abgewandten kegeligen Spannfläche (18) des Stützrings (4,4') anliegt und zwischen dem Innenkonus (17) der Überwurfmutter 6 und der dem Rohrende abgewandten kegeligen Spannfläche (15) des Haltewulstes (14) ein Ringspalt (24) besteht, wohingegen im Betriebszustand der Rohrverbindung (1,1') zwischen dem Haltewulst (14) und dem Stützring (4,4') ein Ringspalt (24') besteht.

2. Rohrverbindung nach Anspruch 1, **dadurch gekennzeichnet, dass** die innere Mantelfläche (20, 20') des Stützrings (4,4') im Betriebszustand der Rohrverbindung (1, 1') an der zugeordneten äußeren Mantelfläche (21) des Rohres (3) anliegt.

3. Rohrverbindung nach Anspruch 1 oder 2, **dadurch gekennzeichnet, dass** im Betriebszustand der Rohrverbindung (1,1') zwischen einer radial ausgerichteten Stirnfläche des Verschraubungskörpers (2) und einer radial verlaufenden Fläche (26) des Stützrings (4,4') ein Ringspalt F verbleibt.

4. Rohrverbindung nach Anspruch 1 oder 2, **dadurch gekennzeichnet, dass** der Haltewulst (14) eine dem Rohrende zugewandte kegelige Spannfläche (16) besitzt, die mit einer entsprechend geformten konischen Spannfläche (16') an dem zugeordneten Ende des Stützrings (4,4') zusammenwirkt, wobei der Kegelwinkel bzw. Konuswinkel im Bereich zwischen 100° und 160° beträgt.

5. Rohrverbindung nach einem der Ansprüche 1 bis 3, **dadurch gekennzeichnet, dass** die Weichdichtung (5) an der dem Rohrende zugewandten Stirnseite des Stützrings (4,4') befestigt ist.

6. Rohrverbindung nach einem Ansprüche 1 bis 4, **dadurch gekennzeichnet, dass** der Stützring (4,4') mit einer dem Innenkonus (17) der Überwurfmutter (6) zugewandten Nase (22) versehen ist, die sich im gefügten Zustand der Rohrverbindung (1,1') in einem Bereich oberhalb des maximalen Durchmessers des Haltewulstes (14) befindet.

7. Rohrverbindung nach Anspruch 5, **dadurch gekennzeichnet, dass** die Nase (22) außen von der dem Rohrende abgewandten kegeligen Spannfläche (18) des Stützrings (4) und innen von einer achsparallel verlaufenden zylindrischen Mantelfläche (23) begrenzt ist.

8. Rohrverbindung nach einem der Ansprüche 1 bis 6, **dadurch gekennzeichnet, dass** die in axiale Richtung des Rohres (3) gemessene Breite des Ringspalts zwischen dem Innenkonus (17) der Überwurfmutter (6) und der dem Rohrende abgewandten kegeligen Spannfläche (15) des Haltewulstes (14) zwischen 0,2 und 0,5 mm beträgt.

9. Rohrverbindung nach einem der Ansprüche 1 bis 7, **dadurch gekennzeichnet, dass** der Stützring (4') an seinem dem Rohrende zugewandten Ende mit einer Schneide (25) versehen ist, die im Betriebszustand der Rohrverbindung (1') in die äußere Mantelfläche (21') des Rohrendes eingegraben ist.

## Claims

1. A pipe connection (1, 1') with a deformed pipe (3), a union element (2) with an inner cone (9), a cylindrical section (10) adjacent thereto and a radially aligned pipe seat floor (12) delimiting the same in the axial direction, as well as a union nut (6) with an inner cone (17) which in the operating state of the pipe connection (1, 1') cooperates with a conical inside recess (15) of a holding bulge (14) of the deformed pipe (3), which inside recess is averted from the pipe end, as well as with conical inside recess (18) of a supporting ring (4, 4'), which inside recess is averted from the pipe end and which supporting ring is arranged between the holding bulge (14) and the inner cone (9) of the union element (2) and is slid onto the pipe end, with the supporting ring (4, 4') resting with a conical inside recess (19) facing the pipe end on the inner cone (9) of the union element (2) and with a soft packing (5) being arranged in a chamber formed by a face surface of the supporting ring (4, 4'), the inside cone (9) of the union element (2) and the outer jacket surface (21, 21') of the pipe end, and with the face surface (13) of the pipe (3) resting in the operating state of the pipe connection (1, 1') on the pipe seat floor (12), **characterized in that** in the joined state of the pipe connection (1, 1') in which the supporting ring (4, 4') rests on the holding bulge (14) the inner cone (17) of the union nut (6) rests at first only on the conical inside recess (18) of the supporting ring (4, 4') which is averted from the pipe end, and that an annular gap (24) exists between the inner cone (17) of the union nut (6) and the conical inside recess (15) of the holding bulge (14) which is averted from the pipe end, whereas in the operating state of the pipe connection (1, 1') there is an annular gap (24') between the holding bulge (14) and the supporting ring (4, 4').

2. A pipe connection according to claim 1, **characterized in that** the inner jacket surface (20, 20') of the supporting ring (4, 4') rests on the associated outer jacket surface (21) of the pipe (3) in the operational state of the pipe connection (1, 1').

3. A pipe connection according to claim 1 or 2, **characterized in that** an annular gap F remains in the operating state of the pipe connection (1, 1') between a radially aligned face surface of the union element (2) and a radially extending surface (26) of the supporting ring (4, 4').

4. A pipe connection according to claim 1 or 2, **characterized in that** the holding bulge (14) comprises a conical inside recess (16) which faces the pipe end and which cooperates with a respectively shaped conical inside recess (16) on the associated end of the supporting ring (4, 4'), with the angle of taper or cone angle being in the region of between 100° and 160°.

5. A pipe connection according to one of the claims 1 to 3, **characterized in that** the soft packing (5) is fastened to the face side of the supporting ring (4, 4') facing the pipe end.

6. A pipe connection according to one of the claims 1 to 4, **characterized in that** the supporting ring (4, 4') is provided with a nose (22) which faces the inner cone (17) of the union nut (6) and which in the joined state of the pipe connection (l, 1') is situated in a region above the maximum diameter of the holding bulge (14).

7. A pipe connection according to claim 5, **characterized in that** the nose (22) is delimited on the outside by the conical inside recess (18) of the supporting ring (4) which is averted from the pipe end and on the inside by a cylindrical jacket surface (23) extending in an axially parallel manner.

8. A pipe connection according to one of the claims 1 to 6, **characterized in that** the width of the annular gap as measured in the axial direction of the pipe (3) between the inner cone (17) of the union nut (6) and the conical inside recess (15) of the holding bulge (14) averted from the pipe end is between 0.2 and 0.5 mm.

9. A pipe connection according to one of the claims 1 to 7, **characterized in that** the supporting ring (4') is provided at its end facing the pipe end with a knife edge (25) which in the operating state of the pipe connection (1') digs into the outer jacket surface (21') of the pipe end.

## Revendications

1. Raccord de tuyau (1, 1') avec un tuyau déformé (3), un corps de vissage (2) avec un cône interne (9), une section cylindrique (10) dans la continuité et un fond d'assise de tuyau (12) orienté radialement et limitant la section, ainsi qu'un écrou à chapeau (6) avec un cône interne (17) qui coopère dans l'état de fonctionnement du raccord de tuyau (1, 1') avec une surface de serrage conique (15) détournée de l'extrémité de tuyau, d'un bourrelet d'arrêt (14) du tuyau déformé (3) ainsi qu'avec une surface de serrage (18) détournée de l'extrémité de tuyau, d'une bague d'appui (4, 4') enfilée sur l'extrémité de tuyau et disposée entre le bourrelet d'arrêt (14) et le cône interne (9) du corps de vissage (2), la bague d'appui (4, 4') s'appliquant par une surface de serrage conique (19) tournée vers l'extrémité de tuyau contre le cône interne (9) du corps de vissage (2) et un joint d'étanchéité compressible (5) étant disposé dans une chambre formée par une surface frontale de la bague d'appui (4, 4') par le cône interne (9) du corps de vissage (2) et la surface externe d'enveloppe (21, 21') de l'extrémité de tuyau, et la surface frontale (13) du tuyau (3) s'appliquant dans l'état de fonctionnement du raccord de tuyaux (1, 1') contre le fond d'assise de tuyau (12), **caractérisé en ce que** dans l'état inséré du raccord de tuyau (1, 1'), dans lequel la bague d'appui (4, 4') s'applique contre le bourrelet de retenue (14), le cône interne (17) de l'écrou chapeau (6) ne s'applique tout d'abord que contre la surface de serrage (18) de la bague d'appui (4, 4'), détournée de l'extrémité de tuyau et **en ce qu'**entre le cône interne (17) de l'écrou à chapeau (6) et la surface de serrage conique (15) du bourrelet d'arrêt (14), détournée de l'extrémité de tuyau, il existe une fente annulaire (24), mais en revanche dans l'état de fonctionnement du raccord de tuyau (1, 1'), il existe une fente annulaire (24') entre le bourrelet d'arrêt (14) et la bague d'appui (4, 4').

2. Raccord de tuyau selon la revendication 1, **caractérisé en ce que** la surface interne d'enveloppe (20, 20') de la bague d'appui (4, 4') s'applique dans l'état de fonctionnement du raccord de tuyau (1, 1') contre la surface d'enveloppe externe associée (21) du tuyau (3).

3. Raccord de tuyau selon la revendication 1 ou 2, **caractérisé en ce que** dans l'état de fonctionnement du raccord de tuyau (1, 1'), il reste entre une surface frontale du corps de vissage (2), dirigée radialement, et une surface (26) de la bague d'appui (4, 4'), s'étendant radialement, une fente annulaire F.

4. Raccord de tuyau selon la revendication 1 ou 2, **caractérisé en ce que** le bourrelet d'arrêt (14) possède une surface de serrage conique (16) tournée vers l'extrémité de tuyau qui coopère avec une surface de serrage (16') conique de forme correspondante contre l'extrémité associée de la bague d'appui (4, 4'), l'angle conique respectivement l'angle de cône étant compris entre 100° et 160°.

5. Raccord de tuyau selon l'une des revendications 1 à 3, **caractérisé en ce que** le joint d'étanchéité compressible (5) est fixé sur la face frontale de la bague d'appui (4, 4'), détournée de l'extrémité de tuyau.

6. Raccord de tuyau selon l'une des revendications 1 à 4, **caractérisé en ce que** la bague d'appui (4, 4') est munie d'un ergot (22) qui est tourné vers le cône interne (17) de l'écrou à chapeau (6) et qui se trouve à l'état inséré du raccord de tuyau (1, 1') dans une zone au-dessus du diamètre maximum du bourrelet d'arrêt (14).

7. Raccord de tuyau selon la revendication 5, **caractérisé en ce que** l'ergot (22) est limité à l'extérieur par la surface de serrage conique (18) de la bague d'appui (4) détournée de l'extrémité de tuyau et à l'intérieur par une surface d'enveloppe (23) cylindrique et axialement parallèle.

8. Raccord de tuyau selon l'une des revendications 1 à 6, **caractérisé en ce que** la largeur de la fente annulaire mesurée dans le sens axial du tube (3) entre le cône interne (17) de l'écrou à chapeau (6) et la surface de serrage conique (15) du bourrelet d'arrêt (14) détournée de l'extrémité de tuyau est comprise entre 0,2 et 0,5 mm.

9. Raccord de tuyau selon l'une des revendications 1 à 7, **caractérisé en ce que** la bague d'appui (4') est munie à son extrémité détournée de l'extrémité de tuyau d'une lame (25) qui est enrobée dans l'état de fonctionnement du raccord de tuyau (1') dans la surface externe d'enveloppe (21') de l'extrémité de tuyau.
